# EUROPEAN PATENT APPLICATION

(11) **EP 1 965 514 A1**
(43) Date of publication of application: **03.09.2008**
(21) Application number: 06840612.3
(22) Date of filing: 22.12.2006
(51) Int. Cl.: H04B 10/08

(54) **A METHOD, EQUIPMENT AND SYSTEM FOR SHARING PROTECTION OF GROUPED OPTICAL CHANNELS**

(30) Priority: 22.12.2005 CN 200510131991
(71) Applicant: Huawei Technologies Co., Ltd., Longgang District Shenzhen 518129 (CN)
(72) Inventor: LI, Congqi, Guangdong Province 518129 (CN)
(74) Representative: Pfenning, Meinig & Partner GbR
(86) International application number: PCT/CN2006/003556
(87) International publication number: WO 2007/071200

(57) **Abstract**

A method, equipment and system for sharing protection of grouped optical channels, in which, takes the network node as the source node, the middle node and/or the host node and divides the influenced optical wavelength channels into a source optical channel set, a host optical channel set and a middle node optical channel set; then separates the source optical channel set from the protecting channel of the protecting fiber selectively to be converted from the working fiber to the protecting fiber to be transmitted, separates the host optical channel set from the channel of the protecting channel selectively to end at the host node; passes through the channel set of the middle node channel set to the next node. Correspondingly, this invention also provides a multi-grouped optical channel share protection devices and a system thereof. Only one pair of multi direction wavelength select device is needed to realize the shared protection of the entire optical wavelength channels of one node, it is not necessary that one pair of wavelength channel is set with one independent wavelength protection rotating loop unit, the cost and the complexity do not relate with the optical wavelength protecting channel shared protection rotating loop request.

## Description

This application claims the priority of a Chinese patent application No. 200510131991.8 submitted with the Chinese Patent Office on December 22, 2005, entitled "A Method and Apparatus for Optical Channel Group Shared Protection", the entire content of which is incorporated herein by reference.

### Field of the Invention

The invention relates to the wavelength division multiplexing technology, and in particular, to a method, an apparatus and a system for optical channel group shared protection in a wavelength division multiplexing (WDM) system.

### Background of the Invention

With the development of the optical device technology and the wavelength division multiplexing (WDM) technology, a single optical fiber is enabled to have a higher communication capacity up to an order of magnitude of Tbps. As a result, a line fault of an optical fiber or an equipment fault in an underlying optical network tends to affect a large amount of service. Accordingly, how to improve network survivability is becoming a hot research field of service providers and equipment providers.

Network survivability refers to the capability of a network to guarantee an acceptable quality of service during a network failure or an equipment failure. The main technical indices characterizing the network survivability include redundancy, restoration ratio and restoration time. The redundancy is defined as the ratio of a total spare capacity to a total working capacity in the network, and may be used to measure the extra cost of a system in improving the network survivability. The restoration ratio is defined as the ratio of the number of restored channels to the number of the total originally failed channels, or the ratio of restored capacity to the total originally failed capacity, in the event of a fault. The restoration time represents the time required by the network for restoring failed services.

Different services may have different requirements for restoration time. Generally, the automatic teller machines in large financial institutions and banks have the strictest requirements for restoration time, usually shorter than 50ms. Ordinary communications services permit a longer service interruption time, but no longer than 30 minutes typically. These services are transmitted via an optical network after being processed by a switch or a router. In general, when the interruption time of a transport network is between 50ms and 200ms, the probability of losing the connection of the switched services is less than 5%. In this case, the influence on the No. 7 signaling networks or cell relay services may be ignored. When the interruption time of the transport network rises to a value between 200ms and 2s, the probability of losing the connection of the switched services begins to increase gradually. An interruption time over 2s sees the loss of most of the circuit switched connections, private line services and telephone services. Further, if the interruption time of the transport network reaches 10s, all the communications sessions will be lost, while an interruption time of the transport network longer than 5 minutes may cause a severe blocking in the switch and an even longer unrecoverable period of upper layer services.

In the prior art, time division multiplexing (TDM) is a major service mode, and synchronous digital hierarchy (SDH) self-healing ring with a powerful protecting function has become a popular networking mode. An SDH ring network supports bidirectional path switching ring (BPSR), unidirectional path switching ring (UPSR), unidirectional line switching ring (ULSR), two fiber bidirectional line switching ring (2F-BLSR), four fiber bidirectional line switching ring (4F-BLSR) and sub-network connection protection (SNCP).

However, with the emergence of large-grained broadband data service applications in metropolitan area networks, wavelength division multiplexing (WDM) system is adopted by the metropolitan area networks gradually as an underlying transport network. A metropolitan area WDM system usually employs a ring networking mode. Similar to the protection modes such as UPSR, BPSR, BLSR, ULSR, and SNCP provided by SDH equipment, the WDM system provides protection modes such as optical unidirectional path switching ring (OUPSR), optical bidirectional path switching ring (OBPSR), optical unidirectional line switching ring (OULSR), optical bidirectional line switching ring (OBLSR), optical sub-network connection protection (OSNCP), optical channel shared protection ring (OCh-SPRing). The OCh-SPRing having the advantages of high wavelength utilization and bandwidth transparency finds a wide application.

In the above solutions of optical channel shared protection, bidirectional service connections on different segments of a ring use the same pair of wavelengths λ1 and λ2. The wavelengths λ1 and λ2 exist on two different optical fibers respectively. In addition, the corresponding λ2 and λ1 on the two different optical fibers serve as the protection wavelengths of the working wavelength λ1 and λ2.

A node participating in the optical channel shared protection is required to support three functions, i.e. service passing-through, service add and service drop. Service passing-through means that protected service from other nodes may pass through this node directly, so that the protected service may be transmitted to its destination node accurately. Service add is to properly switch local service to a protecting channel when the local service is affected. Service drop means that service destined for a local node, if being affected by any fault in its working channel (also referred to as working unit), may be transmitted to the local node via a protecting channel (also referred to as "protection unit"), and the service in the protecting channel may be properly directed to a receiver locally.

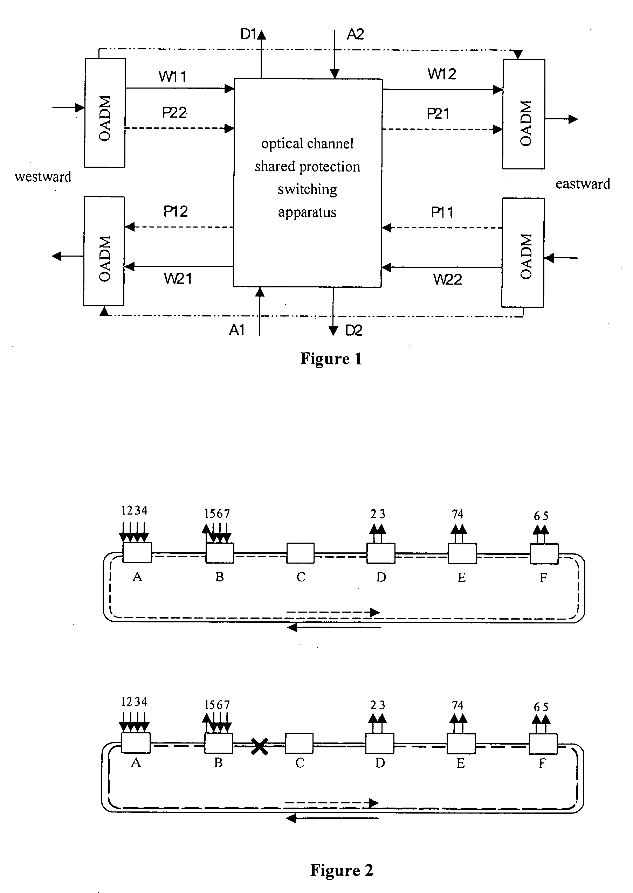

Figure 1 illustrates a conventional method for optical channel shared protection, which implements the above three functions on nodes. In the method, with an optical add/drop multiplexer (OADM), a pair of wavelengths (working wavelength W and protection wavelength P) are separated, and then processed in an apparatus for shared protection switching of optical channels, thereby realizing the management and switching between the working path and the protection path. The disadvantages of this method are apparent in that, when multiple pairs of wavelengths need optical channel shared protection, different pairs wavelengths may require different apparatus for shared protection switching of optical channels. The complexity and cost of the network are linearly proportional to the requirements for protection switching.

However, the existing methods for optical channel shared protection all utilize a pair of wavelengths as a basic unit. The pair of wavelengths has to be de-multiplexed by the OADM from both eastward and westward directions of a line. After being processed by a switching unit for optical channel shared protection, the pair of wavelengths are multiplexed by the OADM again and sent out in both the eastward and westward directions of the line. A Chinese patent application No. 200410034507.5, submitted by the applicant of the present application and entitled "An Apparatus and System for Optical channel shared protection", provides an implementation apparatus and system. In the method, however, each pair of wavelength requires a corresponding apparatus for optical channel shared protection if multiple pairs of wavelengths need optical channel shared protection on a ring. As a result, the cost and complexity of the optical channel shared protection are increased significantly, thereby impacting a limit on the application of the method of optical channel shared protection.

To mitigate the inconvenience in the above method for optical channel shared protection, new methods are presented to enable a more efficient protection. For example, multiple wavelengths may be bound into a group, and the shared protection is performed to the group. In this method, the wavelengths in one group are processed in a same manner, so the protection switching becomes relatively simple. However, different wavelengths in one group may require the same protection switching. In this way, the different wavelengths are required to have the same source and sink nodes. Whereas in practical situations, there is a small probability that a plurality of wavelengths maintain the same service connection over a plurality of segments on the ring. Accordingly, the application of this method is limited.

In another method for optical channel shared protection, when a fault occurs, a plurality of affected optical wavelength channels at the source node on a loop are treated as one optical wavelength channel group. With a loop-back manner, the affected optical wavelength channel groups in the inner fiber are looped back to the outer fiber for transmission, while the affected optical wavelength channel groups in the outer fiber are looped back to the inner fiber for transmission. At an intermediate node, these wavelength channel groups are passed through. At the sink node, the protection optical wavelength channel groups in the inner fiber are restored onto the outer fiber, and are terminated by an OADM. The above process is reverse to the processing of the protection optical wavelength channel groups in the outer fiber. However, there is a very small probability that different wavelength pairs in one optical wavelength channel group are generated/terminated at the same source/sink node. Accordingly, these wavelength channel groups are required to be unbound and rebound them at different nodes.

To solve the above problem, the applicant suggested a method for optical channel group shared protection in a Chinese patent application No. 200510005442.6 (entitled "Optical channel group shared protection"). In the method, the optical channel shared protection of wavelength pairs, having different sources and different sinks, is implemented by use of wavelength selective devices. All of the wavelength pairs share one protection switching apparatus. This circumvents the drawback of increasing cost when there are too many wavelength pairs requiring optical channel shared protection, while the advantages of the optical channel shared protection are retained.

In the method, each node regards the affected optical wavelength channel services for which the node is the source node as one group and the affected optical wavelength channel services for which the node is the sink node as another group (temporarily referred to as source optical channel group and sink optical channel group). The optical wavelength channel services in the source optical channel group may have different sink nodes, and the optical wavelength channel services in the sink optical channel group may have different source nodes. At the source node, a local added service is separated from the source optical channel group and is switched from a working fiber to a protecting fiber for transmission, while at the sink node, the sink optical channel group is separated from the protecting channels in a protecting fiber and switched to a working fiber, thereby being terminated at the sink node (the action is referred to as "Steer" and "Copy"). Further, the source or sink node may remove the source optical channel group or sink optical channel group from the protecting fiber so as to avoid loop-back self excitation on the protecting fiber (the action is referred to as "strip"). In addition, an intermediate node may transparently transmit protecting channel signals, switched to the protecting fiber by the previous node and transmitted via the protecting fiber, to the next node (the action is named "pass through"), according to signaling or self-testing results.

Figure 2 illustrates the principle of the above optical channel group shared protection. As shown in Figure 2, there are 6 nodes on a bidirectional ring, including an outer fiber in the clockwise direction (solid lines in Figure 2) and an inner fiber in the counter-clockwise direction (dashed lines in Figure 2). Node A and node B are connected via a wavelength 1, node A and node E are connected via a wavelength 4, node A and node D are connected via two wavelengths 2 and 3, node B and node E are connected via a wavelength 7, and node B and node F are connected via two wavelengths 5 and 6. Supposing that all service connections are allocated on the clockwise outer fiber (the solid line represents the actual path through which the services pass), when a fault occurs at a span between nodes B and C, services from nodes A and B to node D, services from nodes A and B to node E, and services from nodes A and B to node F need to be switched onto the inner fiber for transmission, while services from node A to node B need not to be switched (because the fault between nodes B and C does not affect the services between nodes A and B). At this time, node B is required to switch the services to nodes E and F onto the inner fiber for transmission, i.e. to execute the action "Steer". Similarly, node A is required to switch the services to nodes D, E and F onto the inner fiber for transmission, i.e. to switch a source optical channel group. In addition, node A is also required to enable the services from node B to nodes E and F to pass through the node A. In other words, node A executes the actions "Steer" and "pass through". At node F, the services transmitted from node B is dropped and terminated, and the services from nodes A, B to nodes D, E are enabled to pass through. In other words, node F executes the actions "copy" and "pass through". Node D and E execute similar actions. Node C, at which no service is terminated, performs no action when a fault occurs at the span between nodes B and C. However, if a fault occurs at a span not adjacent with node C, node C is required to execute the action "pass through".

In Figure 2, if only the outer fiber has a fault while no fault occurs on the inner fiber, the nodes on the ring are required to set a termination point for the optical wavelength channels switched from the outer fiber to the inner fiber, because optical signals may form a loop-back self-excitation on the inner fiber ring without the termination point, thereby affecting the quality of the optical signals. Apparently, a removal of the optical signals from the inner fiber has to be performed at a node that is behind the sink node and between the sink node and the source node (including the sink node and the source node). Because the sink node and the source node may be adjacent with each other, the removal function is generally provided on the source node and the sink nod. If the removal function is provided on the source node, the switched optical signals will travel around the whole ring of inner fiber and be stripped off at the source node. In Figure 2, the "Strip" action is executed by nodes A and B. If provided on the sink node, the removal function is then executed by the nodes D, E, and F. In this case, optical signals do not travel around the whole ring.

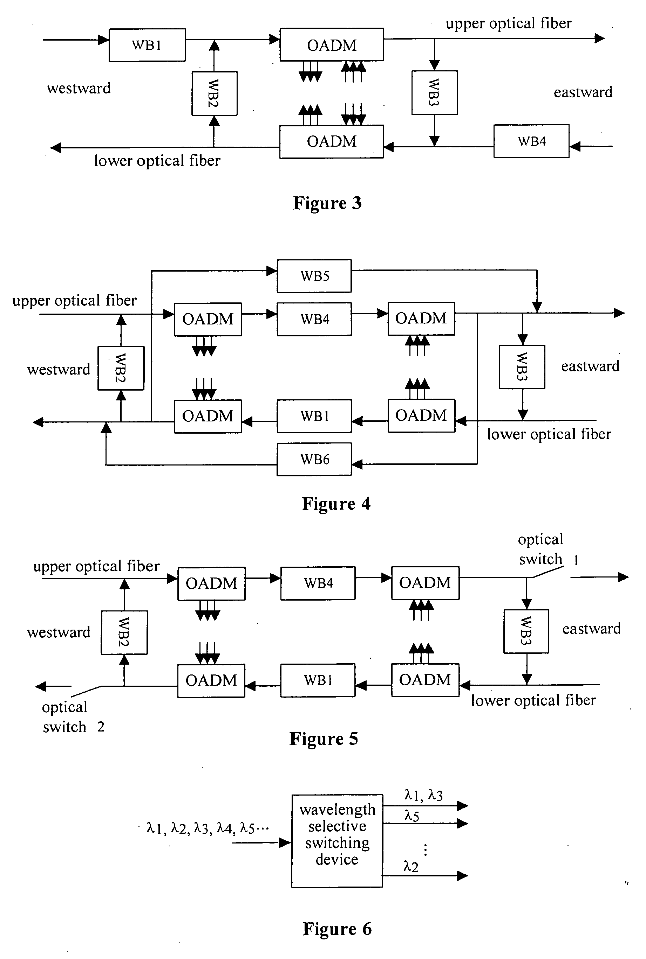

The prior art described above further provides several embodiments. One of the prior art embodiments provides an apparatus for optical channel group shared protection terminated by a source node, as shown in Figure 3. In normal operation, WB2, WB3 are in a completely blocked status, and WB1 and WB4 respectively work in a status of blocking the band of red light wavelength while passing the band of blue light wavelength and a status passing the band of blue light wavelength while blocking the band of red light wavelength (or vice versa). A fault in adjacent fibers in the eastward direction have affects on all the eastward services in the above nodes(since all the eastward services passes through the adjacent fibers). At this time, WB3 opens a wavelength channel corresponding to the eastward added services and switches all the eastward added services on this node onto the lower optical fiber for transmission. The services switched onto the lower optical fiber are not blocked because the wavelengths in the upper optical fiber and lower optical fiber do not conflict with each other in normal operation. So, this node executes the "Steer" function. An optical fiber fault may affect only a single optical fiber. As shown in Figure 3, for example, only the upper optical fiber is broken while the lower optical fiber remains in a good condition. In this case, a node is required to strip off the wavelength switched from the upper optical fiber to the lower optical fibers out of the loop. This function is executed by WB4 among the above nodes, i.e., by setting at WB4 the corresponding wavelength channel opened at WB3 in a blocked status, thereby avoiding the wavelength loop-back in the lower optical fiber. In this way, the node WB4 executes the "Stripe" function of a source node. Apparently, when faults occur in both of the adjacent upper optical fiber and lower optical fiber in the eastward direction, the eastward dropped services at this node may also be affected. Accordingly, when the corresponding source node switches the services from the lower optical fiber onto the upper optical fiber and the services are transmitted to the node, WB1 and WB3 are also required to open a channel for the services of wavelengths, so that the services may be switched from the upper optical fiber back to the lower optical fiber and the corresponding wavelengths may be de-multiplexed in the OADM. In this way, "Copy" function is implemented. The eastward dropped services are switched from the lower optical fiber to the upper optical fiber at a node (which is adjacent or non-adjacent to the fault span) at the opposite side of the fault span, and passes through the intermediate node(a) in the counterclockwise direction (suppose that the source node and sink node of the eastward dropped services are not adjacent with each other in the westward direction). The WB1 provided on the upper optical fiber of the intermediate node is required to ensure the wavelength switched from the lower optical fiber to the upper optical fiber to transparently pass through this node, thereby implementing the "pass through" function.

Apparently, the above embodiment does not provide a solution for the problem of online upgrade of an OADM. In other words, a further embodiment is required for uninterrupted upgrade of the OADM. Figure 4 illustrates a source-strip cross-connect optical channel group shared protection. As shown in Figure 4, WB4 is connected between two OADMs of the working fiber and WB1 is connected between two OADMs of the protecting fiber. The added/dropped services from a local OADM may be simultaneously transmitted, at a transmission port, to the working fiber and protecting fiber. WB2 and WB3 connected between the working fiber and protecting fiber may block the services of the wavelengths to avoid a wavelength conflict in normal operation. When a fault occurs, WB2 and WB3 on the corresponding protecting fiber channel stop blocking the services of the wavelengths, to switch the services of the wavelengths from the working fiber to the protecting fiber. At the sink node, the services are opened by the corresponding WB5 and WB6 connected between the working fiber and protecting fiber, so that the services are switched from the protecting fiber to the working fiber. However, the services of the wavelengths may continue to travel along the protecting fiber until the services reaches the source node and are blocked by WB1 connected on the protecting fiber. Figure 5 illustrates a loop-back optical channel group shared protection. As shown in Figure 5, the loop-back switch is different in that an optical switch 1 is added in the eastward direction and an optical switch 2 is added in the westward direction to prevent abnormal operation in the case of a single-fiber fault. When a fault is detected in the optical fiber, the corresponding switch is cut off immediately so that the fault in the network becomes a bidirectional fiber fault. In this way, the wavelength self excitation may be prevented when the services of the fault wavelength(s) are switched onto the protecting fiber. Reference may be made to the Chinese patent application No. 200510005442.6 for the particular procedure of implementing the above method.

As can be seen, the prior art solutions takes into consideration only the wavelength blocking devices while ignoring the implementation mechanism of other devices. Accordingly, a large number of wavelength blocking devices are needed for implementing the optical channel shared protection since each wavelength blocking device provides support for only two directions, thereby resulting in a high initial cost.

### Summary of the Invention

A technical problem to be solved by some embodiments of the invention is to provide a method, an apparatus and a system for optical channel group shared protection, to solve the problem of a high initial cost due resulting from the large number of blocking devices in the prior art.

To solve the above technical problem, an embodiment of the invention provides a method for optical channel group shared protection. The method may include:
A. dividing affected optical wavelength channel services into a source optical channel group, a sink optical channel group and an intermediate optical channel group by taking network nodes as a source node, an intermediate node and/or a sink node;
B. selectively separating the source optical channel group from the nodes, and switching the source optical channel group from a working fiber to a protecting fiber for transmission;
   selectively separating the sink optical channel group from a protecting channel of the protecting fiber, so that the sink optical channel group is terminated at the sink node; and
   transparently transmitting the intermediate optical channel group to a next node.

Another embodiment of the invention provides an apparatus for optical channel shared group protection. The apparatus may include a splitter, a transmission working unit, and a transmission protecting unit;
the splitter is configured to transmit a local added service to the transmission working unit and the transmission protecting unit respectively;
the transmission working unit is configured to transmit a local added service, a working channel of which is normal, to the normal working channel; and
the transmission protecting unit is configured to transmit a local added service, a working channel of which has a fault, to a backup channel.

Another embodiment of the invention provides an apparatus for optical channel shared group protection. The apparatus may include a reception working unit, a reception protecting unit and a combiner;
the reception working unit is configured to receive a local dropped service, a working channel of which is normal, from the working channel;
the reception protecting unit is configured to receive a local dropped service, a working channel of which has a fault, from a backup channel; and
the combiner is configured to combine the services of the reception working unit and the reception protecting unit for dropping.

Another embodiment of the invention provides a system for optical channel shared group protection. The system may include a splitter, a transmission working unit, a transmission protecting unit, a reception working unit, a reception protecting unit and a combiner;
the splitter is configured to transmit a local added service to the transmission working unit and the transmission protecting unit respectively;
the transmission working unit is configured to transmit a local added service, a working channel of which is normal, to the normal working channel;
the transmission protecting unit is configured to transmit a local added service, a working channel of which has a fault, to a backup channel;
the reception working unit is configured to receive a local dropped service, a working channel of which is normal, from the working channel;
the reception protecting unit is configured to receive a local dropped service, a working channel of which has a fault, from a backup channel; and
the combiner is configured to combine the services of the reception working unit and the reception protecting unit for dropping;
optical fiber connections may exist between the reception protecting unit and the transmission working unit, and between the reception working unit and the transmission protecting unit, to enable the transparent transmission of the intermediate optical channel group.

As can be seen from the above technical solutions, in the embodiments of the invention, at least one pair of multidirectional wavelength selective device are required to enable the shared protection of all optical wavelength channels in one node, without providing a separate wavelength protection switching unit for each pair of wavelength channels. In this way, the requirements for shared protection switching of optical wavelength channels impact no influence on the implementation cost and complexity. In other words, the implementation complexity may be lowered. Further, the method inherits the advantage of the optical channel shared protection, i.e. relative high wavelength utilization efficiency.

### Brief Description of the Drawings

Figure 1 is a diagram illustrating the internal connections of an optical channel shared protection node according to the prior art;

Figure 2 is a diagram illustrating the principle of the optical channel shared protection according to the prior art;

Figure 3 is a diagram illustrating the source-node-termination optical channel group shared protection according to the prior art;

Figure 4 is a diagram illustrating the source-stripe cross-connect optical channel group shared protection according to the prior art;

Figure 5 is a diagram illustrating the loop-back optical channel group shared protection according to the prior art;

Figure 6 is a diagram illustrating the basic principle of a wavelength selective device according to an embodiment of the invention;

Figure 7 is a diagram illustrating a preferred embodiment of the invention;

Figure 8 is a diagram illustrating a service connection with the same source but different sink and a service connection with the same sink but different source according to an embodiment of the invention;

Figure 9 is a diagram illustrating another operation mode in which splitting and combining is performed by means of a coupler and a demultiplexer/multiplexer according to an embodiment of the invention;

Figure 10 is a diagram illustrating an embodiment, in which an expansion port is configured, of the another operation mode according to the embodiment of the invention;

Figure 11 is a diagram illustrating an optical channel group shared protection based on dual transmission and selective reception of an optical add/drop multiplexer (OADM) according to an embodiment of the invention; and

Figure 12 is a diagram illustrating an optical channel group shared protection without a multiplexer/de-multiplexer according to an embodiment of the invention.

### Detailed Description of the Embodiments

Some preferred embodiments of the invention are described in detail with reference to the drawings.

In an embodiment of the invention, a wavelength selective device is utilized to implement the function of optical channel group shared protection. In some embodiments, a wavelength selective switching (WSS) device is used as an example of the wavelength selective device. However, it should be appreciated that the invention is not limited thereto. The WSS device may be implemented in various forms. Regardless of the form of a WSS device, the WSS device has the function of outputting each of different wavelengths or components of an inputted white light signal separately from any one of a plurality of output ports, as shown in Figure 6. Therefore, an output port of the WSS device may serve as a drop port for a certain wavelength channel directly or may serve as a drop port for wavelength group signals at the site including the WSS device. The outputted signal is then processed by a de-multiplexer (DMUX) board in an optical add/drop multiplexer (OADM) to drop a single wavelength. Of course, the WSS device may also serve as a multiplexer to combine a plurality of signals, so that the different wavelength channels in a plurality of inputted signals may be combined to form one multiplexed optical signal.

The method for optical channel group shared protection disclosed in the embodiment of the invention may implement the optical channel group shared protection without any "Strip" action. The method may include:
A. dividing affected optical wavelength channel services into a source optical channel group, a sink optical channel group and an intermediate optical channel group by taking network nodes as a source node, an intermediate node and/or a sink node;
B. selectively separating the source optical channel group from the node, and switching the source optical channel group from a working fiber to a protecting fiber for transmission;
selectively separating the sink optical channel group from a protecting channel of the protecting fiber, so that the sink optical channel group is terminated at the sink node; and
transparently transmitting the intermediate optical channel group to a next node.

In other words, the affected optical wavelength channel services of the source node and the affected optical wavelength channel services of the sink node are grouped respectively, referred to as the source optical channel group and the sink optical channel group. The sink nodes of the source optical channel group may be entirely identical, or partially identical, or entirely different from each other. The source nodes of the sink optical channel group may be entirely identical, or partially similar, or entirely different from each other. At the source node, the source optical channel group is separated from the local services and switched from the working fiber to the protecting fiber (e.g. a backup fiber) for transmission. At the sink node, the sink optical channel group is separated from the protecting channel(s) in the protecting fiber and switched to the working fiber, so as to be terminated at the sink node (this action is refer to as "Steer" and "Copy"). In addition, the intermediate node may transparently transmit a protecting channel signal, switched by the previous node to the protecting fiber and transmitted via the protecting fiber, to the next node in accordance with signaling or a self-test result (this action is referred to as "Pass through").

Accordingly, an apparatus for optical channel group shared protection according to an embodiment of the invention may be implemented in various manners. In an example, the apparatus may include a splitter, a transmission working unit, and a transmission protecting unit. The splitter is configured to transmit a local added service to the transmission working unit and the transmission protecting unit respectively. The transmission working unit is configured to transmit a local added service, a working channel of which is normal, to the normal working channel. The transmission protecting unit is configured to transmit a local added service, a working channel of which has a fault, to a backup channel.

In other words, the apparatus is in the direction of sending services from the source node, and includes the transmission working unit (i.e. transmission working channel) and the transmission protecting unit (i.e. transmission protecting channel). A wavelength selective switching device is arranged in each of the transmission working unit and the transmission protecting unit respectively. The wavelength selective switching device is configured to selectively switch a service transmitted by the source node from the transmission working unit to the transmission protecting unit. Further, the apparatus may further include at least one splitter configured to transmit a local added service to the transmission working unit and the transmission protecting unit respectively. If there are multiple added services, the apparatus may further include at least one multiplexer configured to multiplex the multiple added services and transmit the multiplexed added services to a corresponding splitter. In addition, the apparatus may further include an optical add/drop multiplexer to implement a direct add/drop multiplexing required for channels with no protection, or channels using 1+1 channel protection, or channels using 1:1 channel protection, or channels using n:1 channel protection. The optical add/drop multiplexer may add services by using an add interface or an expansion interface of the wavelength selective switching device on the transmission working unit or the wavelength selective switching device on the transmission protecting unit.

Another apparatus may include a reception working unit, a reception protecting unit, and a combiner. The reception working unit is configured to receive a local dropped service, a working channel of which is normal, from the working channel. The reception protecting unit is configured to receive a local dropped service, a working channel of which has a fault, from a backup channel. The combiner is configured to combine the services of the reception working unit and the reception protecting unit for dropping.

In other words, the another apparatus is in the direction of receiving services at the sink node, and includes the reception working unit and the reception protecting unit. The reception working unit and the reception protecting unit are configured to selectively switch a service received by the sink node from the reception protecting unit to the reception working unit. A wavelength selective switching device or a coupler is arranged in each of the reception working unit and the reception protecting unit respectively. The reception working unit represents a reception working channel, and the reception protecting unit represents a reception protecting unit. Further, the another apparatus may further include at least one combiner configured to drop a service received from the reception working unit and the reception protecting unit. If there are multiple dropped services, the another apparatus may further include at least one demultiplexer configured to receive and demultiplex the multiple dropped services. The apparatus may further include an optical add/drop multiplexer to implement a direct add/drop multiplexing required for channels with no protection, or channels using 1+1 channel protection, or channels using 1:1 channel protection, or channels using n:1 channel protection. The optical add/drop multiplexer may drop services by using an add interface or an expansion interface of the wavelength selective switching device on the reception working unit or the wavelength selective switching device on the reception protecting unit.

In the above two implementing manners, optical fiber connections may exist between the reception protecting unit and the transmission working unit, and between the reception working unit and the transmission protecting unit, so as to enable the transparent transmission of the intermediate optical channel group.

In the invention, though the transmission working unit and the transmission protecting unit are distinguished from one another, it does not mean that a certain physical transmission unit is either one of the two units. A local added service may choose either the eastward direction or the westward direction. For a service transmitted in the eastward direction, the physical transmission unit in the eastward direction is the transmission working unit, and the physical transmission unit in the westward direction is the transmission protecting unit. In contrast, for a service transmitted in the westward direction, the physical transmission unit o in the westward direction is the transmission working unit, and the physical transmission unit in the eastward direction is the transmission protecting unit. In other words, a physical transmission unit may function as a transmission working unit or a transmission protecting unit. The reception working unit and the reception protecting unit have a similar property, and are not repeatedly described herein.

In addition, the invention also provides a system for optical channel group shared protection. The system may include a splitter, a transmission working unit, a transmission protecting unit, a reception working unit, a reception protecting unit and a combiner. The splitter is configured to transmit a local added service to the transmission working unit and the transmission protecting unit respectively. The transmission working unit is configured to transmit a local added service, a working channel of which is normal, to the normal working channel. The transmission protecting unit is configured to transmit a local added service, a working channel of which has a fault, to a backup channel. The reception working unit is configured to receive a local dropped service, a working channel of which is normal, from the working channel. The reception protecting unit is configured to receive a local dropped service, a working channel of which has a fault, from a backup channel. The combiner is configured to combine the services of the reception working unit and the reception protecting unit for dropping. Optical fiber connections may exist between the reception protecting unit and the transmission working unit, and between the reception working unit and the transmission protecting unit, so as to enable the transparent transmission of the intermediate optical channel group.

The invention is described in further details with reference to some specific embodiments.

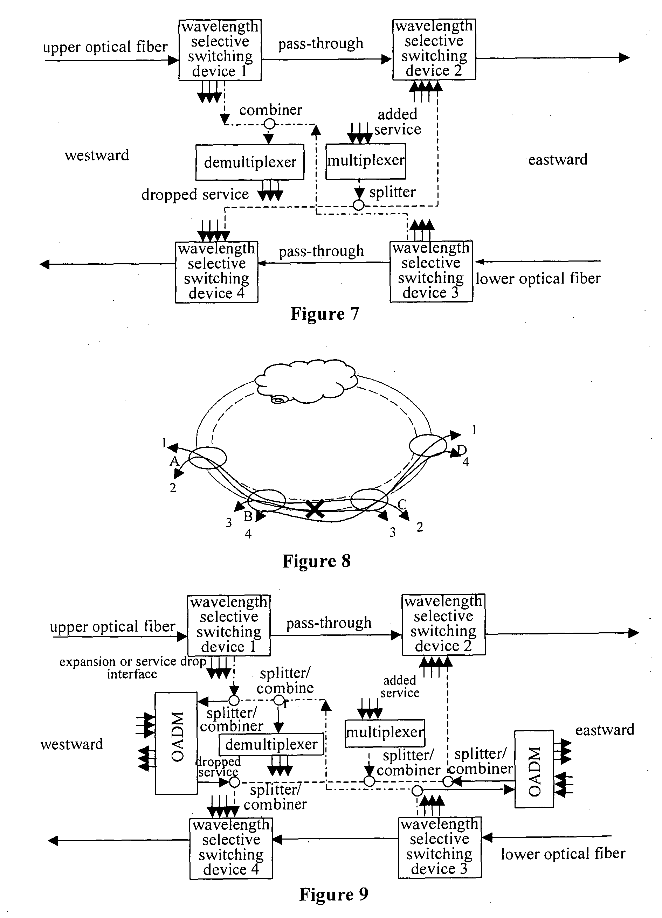

Figure 7 illustrates a preferred embodiment of optical channel group shared protection based on dual transmission and selective reception of an optical add-drop multiplexer (OADM). It may be supposed that a westward fiber fault of a node affects part of the westward services of the node. Each WSS device has a port functioning as a pass-through port, while other ports of the WSS device function as directional expansion ports or drop service ports. The local added services of the node are combined by a multiplexer (MUX) and dually transmitted to WSS2 and WSS4 by a splitter. In normal operation, all westward services are transmitted via WSS4 to the westward fiber(s). In other words, WSS4 opens the wavelength channels of the local westward added services, while WSS2 closes the wavelength channels of the local westward added services to avoid blocking in the corresponding protecting channel(s). For eastward services, WSS2 opens the wavelength channels corresponding to the eastward services while WSS4 closes the wavelength channels, thereby implementing the transmission of the eastward wavelength channels. In such a bidirectional communications system, a service received by the node in the westward direction is dropped via a corresponding wavelength channel opened by WSS1, and is then transferred to the demultiplexer (DMUX) via the combiner so as to be demultiplexed into channel signals. In this way, the drop process of the wavelength is implemented. In addition, WSS3 closes the corresponding wavelength channel(s) to prevent the signals in a protecting channel from interfering with the signals of a working channel. Moreover, all the pass-through ports between WSS1 and WSS2 and between WSS3 and WSS4 close the protecting channel(s) to prevent the loop-back self excitation of the protecting channel(s).

When a fault occurs in a westward fiber and damages part of the local westward services, WSS2 opens the wavelength channels of the damaged local westward services, so that a "Steer" action is executed at the source node. In addition, due to the fault in the westward fiber, WSS1, which is westward, is unable to receive the corresponding wavelength signals. However, the corresponding source node may detect the fault in an eastward fiber, and in this case, execute a corresponding "Steer" action to switch the corresponding damaged services to the westward fiber. At an intermediate node on the protecting path, WSS1 and WSS2, WSS3 and WSS4 may open the protecting channels to be used by the damaged services, so that the damaged services may pass through at the intermediate node, i.e. the intermediate node executes a corresponding "Pass Through" action. After the damaged services pass through the intermediate node via the protecting channel on the protection path and reach the sink node, WSS3 of the sink node opens the corresponding wavelength channels of a port connected with the combiner, so that the signals on the protecting channel may be dropped to the DMUX, i.e. a "Copy" action is executed at the sink node. In normal operation, to prevent the pass-through channel self excitation, all the protecting channels between WSS1 and WSS2 and between WSS3 and WSS4 of the source and sink nodes are blocked. On the protection path, only an intermediate node through which the damaged services pass may open the protecting channels corresponding to the damaged services while the source and sink nodes block the protecting channels on the pass-through path in the eastward direction. In this way, the protecting channels can not form a loop, so no "Strip" action is required.

The above described combiner or splitter may be a coupler, or may be other optical signal splitting/combining devices, such as an optical switch, and a filter.

The process of such optical channel group shared protection is described below with reference to the configuration of the nodes described above and the service distribution as shown Figure 8. Figure 8 is a diagram illustrating a service connection with the same source but different sink and a service connection with the same sink but different source.

It is supposed there are four nodes A, B, C and D on a ring, with a wavelength 1 connection between nodes A and D, a wavelength 2 connection between nodes A and C, a wavelength 3 connection between nodes B and C, and a wavelength 4 connection between nodes B and D. All of the wavelength connections pass through the fiber span between nodes B and C. The inner fiber is supposed to be counter clockwise, corresponding to the upper optical fiber as shown in Figure 7, and the outer fiber is supposed to be clockwise direction, corresponding to the lower optical fiber as shown in Figure 7. When a fault occurs in the optical fiber in the direction from node C to node B, node C opens the wavelength channel corresponding to the services from node C to node A and from node C to node B in WSS2, so as to implement a "Steer" action for the damaged services, i.e. to switch the services, originally transmitted via the outer fiber to nodes A and B, onto the inner fiber (the upper optical fiber) for transmission. When the optical wavelength signals from node C to node A and from node C to node B reach node A, WSS1 and WSS2 of node A opens the wavelength channels corresponding to the services from node C to node B at a pass-through port since node A is an intermediate node for the services from node C to node B, thereby implementing a "Pass Through" action of an intermediate node. For the services from node C to node A, node A, as the sink node, opens the wavelength channels corresponding to the services from node C to node A at a service drop port connecting with the WSS1 and the DMUX, thereby implementing a drop "Copy" action for the services. In normal operation, the wavelength channels corresponding to the services from node C to node A are blocked by nodes A and C, so it is impossible for the services from node C to node A to pass through WSS2 via a WSS1 pass-through port and be transmitted downstream. Node A blocks the services from node C to node A on WSS1 and WSS2, without an extra "Strip" action. When the optical wavelength signals from node C to node B reach node B after being subject to the "Pass Through" action of node A, WSS1 in node B also opens the wavelength channels corresponding to the services from node C to node B between the WSS1 and DMUX, thereby implementing a drop "Copy" action for the services from node C to node B. Similarly, since node B in normal operation may block the protecting wavelength channel corresponding to the services from node C to node B by WSS1 and WSS2, no extra action is needed, and the services from node C to node B can not pass through node B and will not be transmitted downstream. In other words, node B need not execute any "Strip" action. In fact, since all the nodes in normal operation are configured to block the protecting channels, no "Strip" action is involved in the embodiments of the invention.

When a fault occurs in the optical fiber in the direction from node B to node C, WSS3 and WSS4 perform a protection switching process in the opposite direction by implementing functions similar to those of WSS1 and WSS2. This is similar to the exchange of the role of nodes A and B and the role of nodes C and D, and is not repeated herein.

In practice, the optical channel shared protection may not be applied to all of the channels. Some channels may adopt no protection, while some channels may adopt other protection approaches such as the 1+1 channel protection, 1:1 channel protection, and n:1 channel protection, In this case, the same wavelength is applied to both transmission and reception. In addition, the same site may add and drop signals of the same wavelength in both of the eastward and westward directions. In view of this, the invention also provides two diagrams showing two embodiments of operating with other operation modes.

As shown in Figure 9, an optical add/drop multiplexer (OADM) adds/drops a service by using a service add/drop interface of a wavelength selective switching device on the transmission working unit or of a wavelength selective switching device on the transmission protecting unit. An OADM in other operation mode may demultiplex or multiplex by using a coupler and a DMUX and MUX designed for the optical channel group shared protection. Since optical signals dropped in the westward direction via WSS1 and optical signals dropped in the eastward direction via WSS3 are not combined when entering a normal OADM. In other words, the signals in the westward direction are independent from the signals in the eastward direction. Therefore, no co-frequency interference of optical signals may occur in the OADMs in the eastward and westward directions as shown in Figure 9.

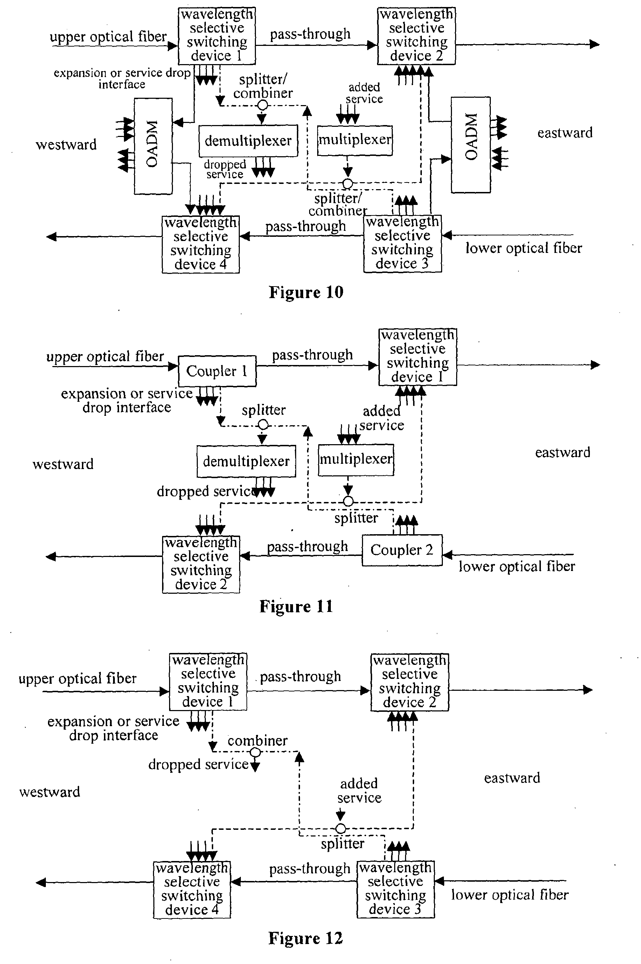

On the other hand, as shown in Figure 10, an optical add/drop multiplexer (OADM) adds/drops a service by using a service add/drop interface of a wavelength selective switching device on the reception working unit or of a wavelength selective switching device on the reception protecting unit. An OADM in other operation mode may utilize other expansion ports, and implement a much safer isolation through an even stricter wavelength channel allocation for the service drop ports or expansion ports of WSS1 and WSS3 and for the service add ports or expansion ports of WSS2 and WSS4.

In Figure 7, four WSS devices are used, with a relatively high cost. In the invention, it is also possible to use only one wavelength selective device in one direction while using a coupler to split and combine the signals in the other direction, as shown in Figure 11.

When a fault occurs in the westward fiber and damages part of the local westward services, WSS1 opens the wavelength channels of the damaged local westward services, so that a "Steer" action is executed at the source node. In addition, due to the fault in the westward fiber, a coupler 1, which is westward, is unable to receive the corresponding wavelength signals. However, the corresponding source node may detect the fault in an eastward fiber, and in this case, execute a corresponding "Steer" action to switch the corresponding damaged services to the westward fiber. At an intermediate node on the protecting path, the coupler 1 and WSS1, a coupler 3 and WSS2 may open the protecting channels to be used by the damaged services, so that the damaged services may pass through at the intermediate node, i.e. the intermediate node executes a corresponding "Pass Through" action. After the damaged services pass through the intermediate node via the protecting channels on the protection path and reach the sink node, the coupler 2 of the sink node opens the corresponding wavelength channels of a port connected with the combiner, so that the signals on the protecting channels may be dropped to the DMUX, i.e. a "Copy" action is executed at the sink node. In normal operation, to prevent the pass-through channel self excitation, all the protecting channels between the coupler 1 and WSS1 and between the coupler 2 and WSS2 of the source and sink nodes are blocked. On the protection path, only an intermediate node through which the damaged services pass may open the protecting channels corresponding to the damaged services while the source and sink nodes block the protecting channels on the pass-through path in the eastward direction. In this way, the protecting channels can not form a loop, so no "Strip" action is required.

Figure 12 illustrates another preferred embodiment of the invention. As shown in Figure 12, an added service transmitted from an optical-wavelength transform unit (OTU) is directly split and directed into WSS2 and WSS4. The WSS2 on the protection path blocks the transmission wavelength channel while the WSS4 on the working path opens the transmission wavelength channel, so as to implement a normal transmission. At the receiving side, the WSS3 on the protection path blocks the corresponding reception wavelength channel while the WSS1 on the working path opens the corresponding reception wavelength channel so as to ensure that the service may be normally added/dropped. When a network fault affects the service, the WSS4 may block the transmission wavelength channel, the WSS2 may open the corresponding transmission wavelength channel, the WSS1 may block the corresponding reception wavelength channel and the WSS3 may open the corresponding reception wavelength channel, thereby implementing the protection switching of the wavelength. As can be seen, the optical channel group shared protection may be implemented without MUX/DMUX. If the WSS2 and WSS3 are selected as the working path, the actions performed by WSS2 and WSS4 and by WSS1 and WSS3 are reversed to those in the above process, and are not repeated herein.

Even if both of a service participating the optical channel shared protection and a service not participating the optical channel shared protection exist, a MUX/DMUX may also be unnecessary. For the service not participating the optical channel shared protection, the optical signals outputted from the OTU may be directly connected to an export of a certain WSS. Of course, the OTU may also be connected to WSS via MUX/DMUX, which is not repeated herein.

As can be seen, in the embodiments of the invention, only three actions including "Steer", "Copy", and "Pass Through" are utilized, while ignoring the blocking of a protecting channel. This leads to a lower complexity, and inherits the advantage of the optical channel shared protection, i.e. relatively high wavelength utilization efficiency. Further, with the invention, the mixed utilization of the optical add/drop multiplexing in any working modes and direction upgrade may also be enabled.

While some preferred embodiments of the invention are described above, those skilled in the art will appreciate that modifications or improvements may be made without departing from the principle of the invention. These modifications or improvements should be considered as falling within the scope of the invention.

## Claims

1. A method for optical channel group shared protection, **characterized by** comprising:
A. dividing affected optical wavelength channel services into a source optical channel group, a sink optical channel group and an intermediate optical channel group by taking network nodes as a source node, an intermediate node and/or a sink node;
B. selectively separating the source optical channel group from the nodes, and switching the source optical channel group from a working fiber to a protecting fiber for transmission;
selectively separating the sink optical channel group from a protecting channel of the protecting fiber, so that the sink optical channel group is terminated at the sink node; and
transparently transmitting the intermediate optical channel group to a next node.

2. The method for optical channel group shared protection according to claim 1, **characterized in that** dividing the affected optical wavelength channel services is performed by using a wavelength selective device.

3. The method for optical channel group shared protection according to claim 2, **characterized in that** the wavelength selective device is implemented by combining power distribution and wavelength selection.

4. The method for optical channel group shared protection according to claim 2, **characterized in that** at least one wavelength selective device is arranged in each direction of the nodes.

5. The method for optical channel group shared protection according to claim 1, **characterized in that** sink nodes of the source optical channel group are entirely identical, or partially identical, or entirely different from each other, and source nodes of the sink optical channel group are entirely identical, or partially identical, or entirely different from each other.

6. The method for optical channel group shared protection according to claim 1, **characterized in that** transparently transmitting the intermediate optical channel group to a next node is performed according to signaling or a self-test result.

7. An apparatus for optical channel group shared protection comprising a splitter, a transmission working unit, and a transmission protecting unit, wherein
the splitter is configured to transmit a local added service to the transmission working unit and the transmission protecting unit respectively;
the transmission working unit is configured to transmit a local added service, a working channel of which is normal, to the normal working channel; and
the transmission protecting unit is configured to transmit a local added service, a working channel of which has a fault, to a backup channel.

8. The apparatus for optical channel group shared protection according to claim 7, **characterized in that** a wavelength selective device is arranged in each of the transmission working unit and the transmission protecting unit.

9. The apparatus for optical channel group shared protection according to claim 7, **characterized in that** the splitter comprises a coupler or an optical switch.

10. The apparatus for optical channel group shared protection according to claim 7, **characterized by** further comprising at least one multiplexer, connected with the splitter and configured to multiplex multiple added services and transmit the multiplexed added services to the splitter.

11. The apparatus for optical channel group shared protection according to claim 7 or claim 10, **characterized by** further comprising an optical add/drop multiplexer, connected with the transmission working unit and the transmission protecting unit respectively and configured to perform a direct add/drop multiplexing to a channel with no protection, or a channel using any one of 1+1 channel protection, 1:1 channel protection, or n:1 channel protection.

12. The apparatus for optical channel group shared protection according to claim 11, **characterized in that** the optical add/drop multiplexer is further configured to add a service via a service add interface or an expansion interface of the wavelength selective device on the transmission working unit or of the wavelength selective device on the transmission protecting unit.

13. An apparatus for optical channel group shared protection comprising a reception working unit, a reception protecting unit and a combiner, wherein
the reception working unit is configured to receive a local dropped service, a working channel of which is normal, from the working channel;
the reception protecting unit is configured to receive a local dropped service, a working channel of which has a fault, from a backup channel; and
the combiner is configured to combine the services of the reception working unit and the reception protecting unit for dropping.

14. The apparatus for optical channel group shared protection according to claim 13, **characterized in that** a wavelength selective device or a coupler is arranged in each of the reception working unit and the reception protecting unit respectively.

15. The apparatus for optical channel group shared protection according to claim 13, **characterized in that** the combiner is a coupler or an optical switch.

16. The apparatus for optical channel group shared protection according to claim 13, **characterized by** further comprising a de-multiplexer, connected with the combiner and configured to receive and demultiplex multiple services from the combiner.

17. The apparatus for optical channel group shared protection according to claim 13 or claim 16, **characterized by** further comprising an optical add/drop multiplexer, connected with the reception working unit and the reception protecting unit respectively and configured to perform a direct add/drop multiplexing to a channel with no protection, or a channel using any one of 1+1 channel protection, 1:1 channel protection, or n:1 channel protection.

18. The apparatus for optical channel group shared protection according to claim 17, **characterized in that** the optical add/drop multiplexer is further configured to drop a service via a service drop interface or an expansion interface of the wavelength selective device on the reception working unit or of the wavelength selective device on the reception protecting unit.

19. A system for optical channel group shared protection comprising a splitter, a transmission working unit, a transmission protecting unit, a reception working unit, a reception protecting unit and a combiner, wherein
the splitter is configured to transmit a local added service to the transmission working unit and the transmission protecting unit respectively;
the transmission working unit is configured to transmit a local added service, a working channel of which is normal, to the normal working channel;
the transmission protecting unit is configured to transmit a local added service, a working channel of which has a fault, to a backup channel;
the reception working unit is configured to receive a local dropped service, a working channel of which is normal, from the working channel;
the reception protecting unit is configured to receive a local dropped service, a working channel of which has a fault, from a backup channel; and
the combiner is configured to combine the services of the reception working unit and the reception protecting unit for dropping,
optical fiber connections exist between the reception protecting unit and the transmission working unit, and between the reception working unit and the transmission protecting unit, to enable the transparent transmission of the intermediate optical channel group.

20. The system for optical channel group shared protection according to claim 19, **characterized in that**
a wavelength selective device is arranged in each of the transmission working unit and the transmission protecting unit respectively; and
a coupler or a wavelength selective device is arranged in each of the reception working unit and the reception protecting unit respectively.

21. The system for optical channel group shared protection according to claim 19, **characterized by** further comprising:
a multiplexer, connected with the splitter and configured to multiplex added services and transmit the multiplexed added services to the splitter; and
a demultiplexer, connected with the combiner and configured to demultiple multiple services received from the combiner.

22. The system for optical channel group shared protection according to claim 19 or claim 21, **characterized by** further comprising:
two optical add/drop multiplexers, one of the two optical add/drop multiplexers being connected with the transmission working unit and the transmission protecting unit respectively, and the other one of the two optical add/drop multiplexers being connected to the reception working unit and the reception protecting unit respectively, both of the two OADMs are configured to perform a direct add/drop multiplexing to a channel with no protection, or to a channel using any one of 1+1 channel protection, 1:1 channel protection, or n: channel protection.

23. The system for optical channel group shared protection according to claim 22, **characterized in that**
the one of the two optical add/drop multiplexers is further configured to add a service via a service add interface or an expansion interface of the wavelength selective device on the transmission working unit or of the wavelength selective device on the transmission protecting unit; and
the other one of the two optical add/drop multiplexers is further configured to drop a service via a service drop interface or an expansion interface of the wavelength selective device on the reception working unit or of the wavelength selective device on the reception protecting unit.
